# EUROPEAN PATENT SPECIFICATION

(11) **EP 2 094 522 B1**
(45) Date of publication and mention of the grant of the patent: **10.04.2013**
(21) Application number: 07852198.6
(22) Date of filing: 30.11.2007
(51) Int. Cl.: B60K 35/00, B60Q 3/04, G01D 13/28

(54) **Instrument cluster for vehicles**
Instrumentengruppe für Fahrzeuge
Groupe des instruments pour véhicules

(30) Priority: 21.12.2006 SE 0602777
(43) Date of publication of application: 02.09.2009
(73) Proprietor: Scania CV AB (PUBL), 151 87 Södertälje (SE)
(72) Inventor: JOHANSSON, Jonny, SE-147 71 GRÖDINGE (SE)
(74) Representative: Thum, Bernhard
(86) International application number: PCT/SE2007/050926
(87) International publication number: WO 2008/076057

(56) References cited:
- DE-A1- 19 807 482
- DE-A1-102004 053 721
- DE-A1-102005 011 824
- US-A- 6 032 608
- US-B1- 6 827 034
- US-B2- 6 863 411

## Description

### THE FIELD OF THE INVENTION

The present invention refers to an instrument cluster for a motor vehicle according to the preamble of claim 1.

### BACKGROUND AND PRIOR ART

When driving in the dark, it is important not to have a too strong illumination intensity from the instrument cluster in order to enable maintaining of an as good as possible twilight vision.

It is known to provide instrument clusters with a possibility for the driver to reduce generally the illumination intensity of the background lightning of the instrument cluster in order to meet this problem. This means that all display members and lamps still are on but the lightning has a lower illumination intensity. However, it is also not suitable to give the driver too much information since the brain only may process a limited number of stimuli at a given point of time. A general reduction of the illumination intensity thus does not reduce the information quantity, but makes it more difficult for the driver to perceive the essential information from a relatively weakly illuminated instrument cluster.

The car manufacturer SAAB has tried to solve the problem with a function called Black Panel and enabling for the driver to turn off large parts of the instrument cluster and merely turn on the panel if anything particular occurs. If the driver still would like to have the turned-off information from the instrument cluster, the Black Panel function has to be switched off, which means that the driver has to withdraw the attention from the road and the traffic for switching on and switching off this function. When the Black Panel function is switched off, the background lightning has full intensity, and thus the problem of a detoriation of the twilight vision remains.

Prior art document DE 10 2005 011 824 A1 describes an instrument cluster according to the preamble of claim 1 wherein the area around an indication member is temporarily illuminated in order to improve the perceivability of the essential information indicated by the indication member.

Prior art document DE 10 2004 053 721 A1 describes a similar system in which the area around the indication member is illuminated.

### SUMMARY OF THE INVENTION

The object of the present invention is to provide an instrument cluster, which during driving in the dark gives a good information and at the same time makes it possible for the driver to maintain a proper twilight vision.

This object is achieved by an instrument cluster in accordance with claim 1.

By means of such an instrument cluster it is thus possible to let the background illumination merely illuminate the actual part of the display field, i.e. part of the display field where the indication member, for instance a meter needle, is located. The illuminated part area may then be displaced together with the indication member. For instance, the illuminated part area of a speedometer may be displaced with the meter needle when the speed is changed. The driver will then receive the essential information, i.e. information about the actual indicated value, whereas the remaining information on the display field is turned off and thus not illuminated. In such a way a minimum illumination intensity may be used at the same time as relevant information in a secure manner may be observed by the driver. Advantageously, the illumination device is arranged to permit secondary lightning of the part or the parts of the display field located outside the part area, wherein the secondary lightning is weaker than the primary lightning. The secondary lightning may comprise complete turning off of the part or the parts of the display field located outside the part area.

According to an embodiment of the invention, the illumination device comprises a set of illumination members, which are provided in said at least one display member for providing a background lightning and which are controllable individually. Such individually controllable illumination members may thus be turned off and turned on depending on if the indication member is located in the proximity of the actual illumination member. It is to be noted that the number of illumination members, for instance in the form of light diodes, may be large and that the illumination members may be provided over the whole surface of the display field or for instance around the periphery of the display field. Consequently, the illumination members may advantageously be located in such a way that they permit provision of a background lightning covering the whole display field. It is to be noted here that the inventive function may be disconnectable, for instance when driving in daylight when it may be desirable to let the whole display field be illuminated by the background lightning since twilight vision is not needed.

According to a further embodiment of the invention, the instrument cluster comprises a control unit, to which each of the illumination members is individually connected. Such a control unit enables an individual control of the illumination members. Advantageously, the instrument cluster may then comprise means arranged to sense the value of a parameter related to a position on the display field in which the indication member is located. Such means may be realised in various ways, for instance by means of sensors sensing the position of the indication member, for instance a meter needle, directly on the display field, or an electric circuit sensing the feeding to a drive member, for instance a step motor, positioning the indication member.

According to a further embodiment of the invention, the control unit is arranged to control the indication members depending on the value of this parameter. In such a way a possible control arrangement is provided in an easy manner for turning off and turning on the illumination members individually depending on the instantaneous position of the indication member. According to a further embodiment of the invention, the part area extends on the display field on both sides of the indication member. The size of the part area may vary according to individual wishes from the driver. Advantageously, the size of the indication area is as thin as possible in order to provide an as small as possible negative influence on the twilight vision of the driver. The size of the part area may also be determined by the scaling of values on the display field of the actual display member. In certain cases, a very small part area may possibly be sufficient for giving the information needed by the driver. Advantageously, the display field may have a first surface area and the part area a second surface area which is smaller than or equal to 50% of the first surface area.

According to a further embodiment of the invention, said at least one display member comprises at least one of a speedometer, a tachometer, a brake pressure meter, a fuel meter and a engine temperature meter.

The object is also acheived by means of the motor vehicle initially defined, comprising an instrument cluster as set forth above.

### BRIEF DESCRIPTION OF THE DRAWINGS

The invention is now to be explained more closely by means of a description of preferred embodiments and with reference to the drawings attached hereto.
- Fig. 1: discloses a view from inside of a motor vehicle having an instrument cluster according to the invention.
- Fig. 2: discloses a view of the instrument cluster in Fig. 1.
- Fig. 3: discloses a view of a display member of the instrument cluster in Fig. 2.
- Fig. 4: discloses schematically a diagram of the control of an illumination device of the instrument cluster.

### DETAILED DESCRIPTION OF VARIOUS EMBODIMENTS OF THE INVENTION

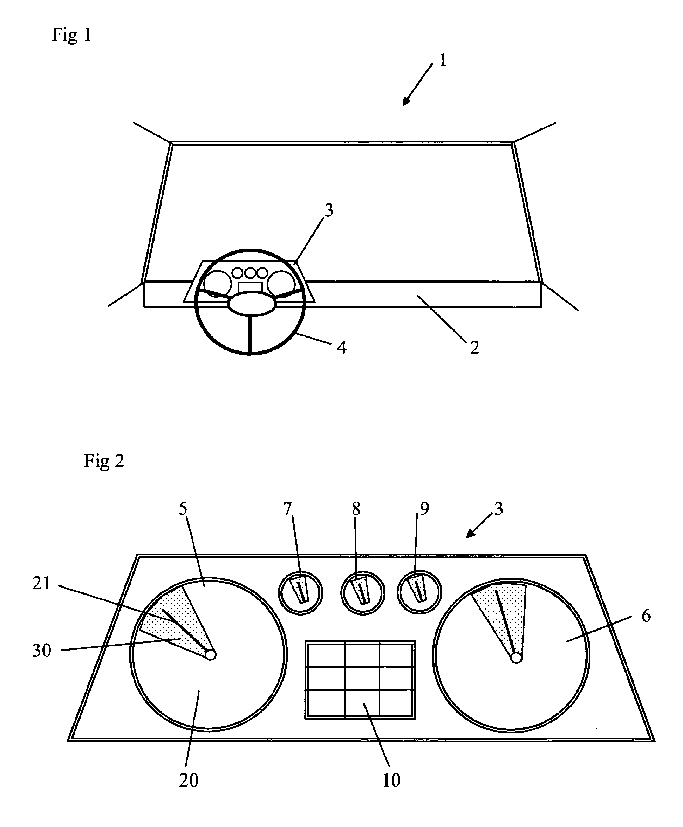

Fig. 1 discloses a view from inside of a motor vehicle 1, for instance a heavy vehicle or a passenger car, which comprises an instrument board 2 having an instrument cluster 3 mounted in a conventional manner in front of the steering wheel 4 of the motor vehicle 1. The instrument cluster 3 is disclosed more closely in Fig. 2. The instrument cluster 3 comprises five display members 5-9, which in the example disclosed are configured as meter panels including a speedometer, a tachometer, a brake pressure meter, a fuel meter and a motor temperature meter, respectively. The instrument cluster 3 may also comprise further display members or indication lamps of various kinds. For instance, a number of indication lamps 10 for indicating different states of the motor vehicle 1 or the engine of the motor vehicle 1. Examples of such indication lamps 10 may be charging indicator lamp, warning flasher lights etc. The instrument cluster 3 may also comprise further meters which are not disclosed here, for instance a clock, outside temperature etc. and different kinds of manoeuvring members.

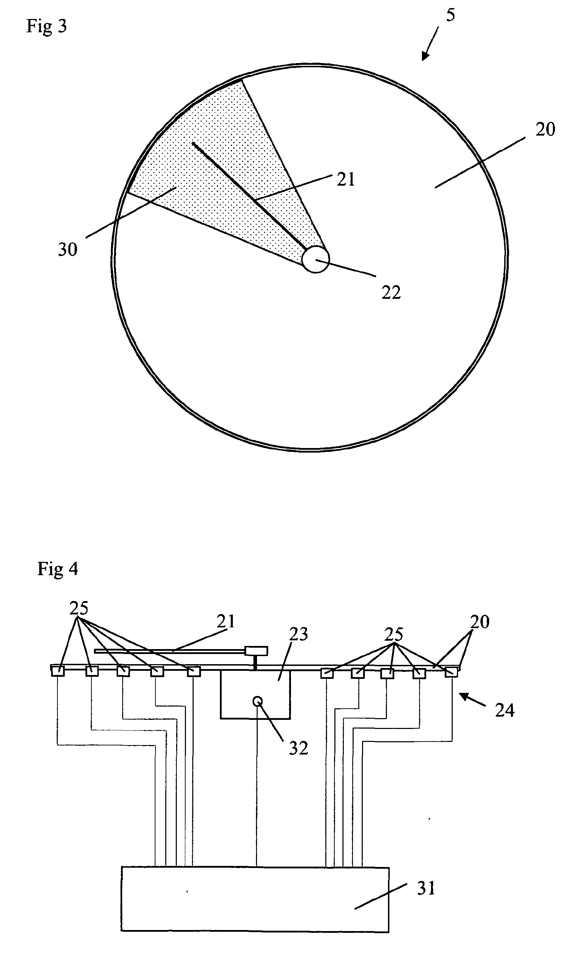

It is to be noted that the five display members 5-9 may be constructed in a similar way with regard to the illumination device providing a suitable background lightning of the respective display member 5-9. The illumination device may therefore be explained in connection with Figs. 3 and 4, which disclose the display member 5 that provides the speedometer of the motor vehicle 1.

Each such display member 5 has a display field 20 and an indication member 21, in the embodiments disclosed in the form of a meter needle which is rotable around a center point 22 of the display field 20 in a conventional manner. The indication member 21 is thus arranged to move over the display field 20. The indication member 21 is driven by a drive member 23, which in the embodiments disclosed comprises an electric step motor. The display member 5 also has an illumination device 24, which is configured to provide a background lightning of the display member 5 and on the display field 20. The illumination device 24 comprises a set of illumination members 25, which are provided in the display member 5 in a suitable manner. Fig. 4 discloses schematically how a number of such illumination members 25 are provided beneath the display field 20 proper. Advantageously, these illumination members 25 may be provided along the periphery of the display field 20 and possibly also beneath the display field 20 proper. The display field 20 may advantageously be formed by a partly transparent disc, which let light from the illumination members 25 through and distributes the light uniformly over an area around the individual illumination member 25. Advantageously, each illumination member 25 may be formed by any suitable light diode.

The illumination members 25 are furthermore advantageously positioned in such a way that they permit the provision of a background lightning covering the whole display field 20 if all illumination members 25 are turned on. According to this invention, the illumination device 24 is arranged to permit primary illumination of merely a part area 30 of the display field 20. The indication member 21 is located within this part area 30. More precisely, the part area 30 extends on the display field 20 in such a way that it extends on both sides of the indication member 21 which advantageously may extend centrally through the part area 30.

Furthermore, the illumination device 24 is arranged to permit displacement of the part area 30 over the display field 20. The illumination device 24 is also arranged to control this displacement of the part area 30 depending on the movement of the indication member 21. This controlling is advantageously configured in such a way that the part area 30 continuously follows the indication member 21 in its movement in such a way that the indication member 21 substantially continuously extends centrally through the part area 30. It is to be noted that the indication member 21 may, however, be permitted to perform small movements within the part area 30 also when the part area 30 does not move in order to avoid a flashing behaviour.

Furthermore, it is to be noted that the illumination device 24 is arranged, at the same time as the part area 30 is illuminated by the primary lightning, to permit a secondary lightning of the part or the parts of the display field 20 that is located outside the part area 30. The secondary lightning may comprise complete turning off of this part or these parts, or a weaker or substantially weaker illumination intensity than of the primary lightning. It is to be noted that also the other display members 6-9 of the instrument cluster 3 have the same function with an illuminated part area and a none-illuminated display field. The remaining parts of the instrument cluster 3, i.e. the lamps 10 and the remaining manoeuvring members, are advantageously turned off when the function is switched on. The warning lamps which are normally turned off will of course be turned on if a warning is called for even if the function is switched on.

This function, i.e. the background lightning on the part area 30 and none-illumination or reduction of the remaining parts of the display field 20 and the instrument cluster 3, is advantageously possible to switch on by the driver when he or she wishes to make use of the function. The function may also be switched on automatically when the surrounding light decreases below a certain intensity level, i.e. when it is important that the twilight vision of the driver is not detoriated due to a too powerful illumination intensity from the instrument cluster 3 and its display members 5-9. Furthermore, the function may be switched off when the intensity of the surrounding light exceeds the determined intensity level.

In order to acheive said function, the different illumination members 25 are individually controllable, i.e. each illumination member 25 may be turned on or turned off independent of the other illumination members 25. Such a controlling is acheived in the embodiments disclosed by means of a control unit 31, which is disclosed schematically in Fig. 4 and to which each of the illumination members 25 is individually connected.

Furthermore, the instrument cluster 3 comprises means arranged to sense a parameter related to a position on the display field 20 at which the indication member 21 is located. In the embodiments disclosed, this parameter is related to the controlling of the drive member 23. By sensing the feeding to the step motor of the drive member 23, information may be obtained about the position of the indication member 21. The value of this parameter may then be utilized for controlling the turning off and the turning on, respectively, of the different illumination members 25 via the control unit 31. Also other kinds of sensing means or sensors may of course be used.

The display field 20 has a first surface area and the part area 30 has a second surface area. The second surface area 30 is substantially smaller than the first surface area, and may for instance be less than or equal to 50% of the first surface area. The second surface area may also be smaller than or equal to 40, 30, 20, 10% of the first surface area. It is to be noted that the transition between the part area 30 and the display field 20 does not have to be sharp as indicated in Fig. 3 but may be gradially decreasing so that the background lightning within the part area 30 gradually decreases to the secondary lightning, for instance complete turning off, on the display field 20. At quick changes of the position of the indication member 21, for instance during quick acceleration or powerful deceleration, the size of the part area 30 may for the moment be increased for avoiding that the part area 30 will move too quickly and create an irritating change of the illumination.

The invention is not limited to the disclosed and/or described embodiments but may be varied and modified within the scope of the following claims.

## Claims

1. An instrument cluster for a motor vehicle (1), comprising
at least one display member (5-9) having a display field (20) and an indication member (21), which is arranged to move over the display field (20), and
an illumination device (24) comprising a set of illumination members (25), which are provided in said at least one display member (5-9) for providing a background lightning of the display member (5-9) and which are controllable individually by a control unit (31) to which each of the illumination members (25) is individually connected,
wherein the illumination device (24) is arranged to permit primary lightning of a part area (30) of the display field (20), within which part area (30) the indication member (21) is located, and to permit displacement of this part area (30) over the display field (20), **characterised in that** the illumination device (24) is arranged to control this displacement depending on the movement of the indication member (21), wherein at quick position changes of the indication member (21) the size of this part area (30) is increased.

2. An instrument cluster according to claim 1, **characterized in that** the illumination device (24) is arranged to permit secondary lightning of the part or the parts of the display field (20) which is located outside the part area (30), wherein the secondary lightning is weaker than the primary lightning.

3. An instrument cluster according to claim 2, **characterized in that** the secondary lightning comprises complete turning off of the part or the parts of the display field (20) located outside the part area (30).

4. An instrument cluster according to anyone of the preceding claims, **characterized in that** the illumination members (25) are located in such a way that they permit provision of a background lightning covering the whole display field (20).

5. An instrument cluster according to anyone of the preceding claims, **characterized in that** the instrument cluster (3) comprises means (32) arranged to sense the value of a parameter related to a position on the display field (20), in which the indication member (21) is located.

6. An instrument cluster according to anyone of the preceding claims, **characterized in that** the control unit (31) is arranged to control the illumination members (25) depending of the value of this parameter.

7. An instrument cluster according to anyone of the preceding claims, **characterized in that** the part area (30) extends on the display field (20) on both sides of the indication member (21).

8. An instrument cluster according to anyone of the preceding claims, **characterized in that** the display field has a first surface area and that the part area has a second surface area which is smaller than or equal to 50% of the first surface area.

9. An instrument cluster according to anyone of the preceding claims, **characterized in that** said at least one display member (5-9) comprises at least one of a speedometer, a tachometer, a brake pressure meter, a fuel meter and a motor temperature meter.

## Patentansprüche

1. Instrumentengruppe für ein Kraftfahrzeug (1), umfassend:
mindestens ein Anzeigeelement (5-9) mit einem Anzeigefeld (20) und einem Markierungselement (21), das dazu ausgebildet ist, sich über das Anzeigefeld (20) hinwegzubewegen, und
eine Beleuchtungseinrichtung (24) umfassend einen Satz von Beleuchtungselementen (25), die in dem mindestens einen Anzeigeelement (5-9) zum Bereitstellen einer Hintergrundbeleuchtung vorgesehen sind und die durch eine Steuereinheit (31) einzeln steuerbar sind, an die jedes der Beleuchtungselemente (25) einzeln angeschlossen ist,
wobei die Beleuchtungseinrichtung (24) dazu ausgebildet ist, eine Primärbeleuchtung einer Teilfläche (30) des Anzeigefelds (20) zu ermöglichen, innerhalb welcher Teilfläche (30) das Markierungselement (21) angeordnet ist, und eine Verschiebung dieser Teilfläche (30) über das Anzeigefeld (20) hinweg zu ermöglichen,
**dadurch gekennzeichnet, dass** die Beleuchtungseinrichtung (24) dazu ausgebildet ist, diese Verschiebung in Abhängigkeit von der Bewegung des Markierungselements (21) zu steuern, wobei bei schnellen Positionsänderungen des Markierungselements (21) die Größe dieser Teilfläche (30) vergrößert ist.

2. Instrumentengruppe nach Anspruch 1, **dadurch gekennzeichnet, dass** die Beleuchtungseinrichtung (24) dazu ausgebildet ist, eine Sekundärbeleuchtung des Teils oder der Teile des Anzeigefelds (20), das außerhalb der Teilfläche (30) angeordnet ist, zu ermöglichen, wobei die Sekundärbeleuchtung schwächer als die Primärbeleuchtung ist.

3. Instrumentengruppe nach Anspruch 2, **dadurch gekennzeichnet, dass** die Sekundärbeleuchtung ein vollständiges Ausschalten des Teils oder der Teile des außerhalb der Teilfläche (30) angeordneten Anzeigefelds (20) umfasst.

4. Instrumentengruppe nach einem der vorhergehenden Ansprüche, **dadurch gekennzeichnet, dass** die Beleuchtungselemente (25) derart angeordnet sind, dass sie die Bereitstellung einer das gesamte Anzeigefeld (20) überdeckenden Hintergrundbeleuchtung ermöglicht.

5. Instrumentengruppe nach einem der vorhergehenden Ansprüche, **dadurch gekennzeichnet, dass** die Instrumentengruppe (3) Mittel (32) umfasst, die dazu ausgebildet sind, den Wert eines sich auf eine Position auf dem Anzeigefeld (20), in dem das Markierungselement (21) angeordnet ist, beziehenden Parameters zu detektieren.

6. Instrumentengruppe nach einem der vorhergehenden Ansprüche, **dadurch gekennzeichnet, dass** die Steuereinheit (31) dazu ausgebildet ist, die Beleuchtungselemente (25) in Abhängigkeit von dem Wert dieses Parameters zu steuern.

7. Instrumentengruppe nach einem der vorhergehenden Ansprüche, **dadurch gekennzeichnet, dass** die Teilfläche (30) sich auf dem Anzeigefeld (20) auf beiden Seiten des Markierungselements (21) erstreckt.

8. Instrumentengruppe nach einem der vorhergehenden Ansprüche, **dadurch gekennzeichnet, dass** das Anzeigefeld einen ersten Oberflächenbereich aufweist und dass die Teilfläche einen zweiten Oberflächenbereich aufweist, der kleiner als oder gleich 50% des ersten Oberflächenbereichs ist.

9. Instrumentengruppe nach einem der vorhergehenden Ansprüche, **dadurch gekennzeichnet, dass** das mindestens eine Anzeigenelement (5-9) mindestens eines der folgenden umfasst: eine Geschwindigkeitsanzeigeeinrichtung, eine Tachometereinrichtung, eine Bremsdruckmesseinrichtung, eine Kraftstoffmesseinrichtung und eine Motortemperaturmesseinrichtung.

## Revendications

1. Groupe d'instruments pour un véhicule à moteur (1), comprenant au moins un élément d'affichage (5 à 9) comportant un champ d'affichage (20) et un élément d'indication (21), qui est disposé pour se déplacer sur le champ d'affichage (20), et
un dispositif d'éclairage (24) comprenant un ensemble d'éléments d'éclairage (25) qui sont prévus dans ledit au moins un élément d'affichage (5 à 9) pour délivrer un éclairage de fond de l'élément d'affichage (5 à 9) et qui peuvent être commandés individuellement par une unité de commande (31) à laquelle chacun des éléments d'éclairage (25) est individuellement connecté,
dans lequel le dispositif d'éclairage (24) est disposé pour permettre un éclairage primaire d'une zone partielle (30) du champ d'affichage (20), à l'intérieur de laquelle zone partielle (30) l'élément d'indication (21) est placé, et pour permettre le déplacement de cette zone partielle (30) sur le champ d'affichage (20), **caractérisé en ce que** le dispositif d'éclairage (24) est disposé pour commander ce déplacement en fonction du déplacement de l'élément d'indication (21), dans lequel à des changements de position rapides de l'élément d'indication (21) la taille de cette zone partielle (30) augmente.

2. Groupe d'instruments selon la revendication 1, **caractérisé en ce que** le dispositif d'éclairage (24) est disposé pour permettre un éclairage secondaire de la partie ou des parties du champ d'affichage (20) se situant à l'extérieur de la zone partielle (30) dans lequel la lumière secondaire est plus faible que la lumière primaire.

3. Groupe d'instruments selon la revendication 2, **caractérisé en ce que** l'éclairage secondaire comprend la désactivation complète de la partie ou des parties du champ d'affichage (20) se situant à l'extérieur de la zone partielle (30).

4. Groupe d'instruments selon l'une quelconque des revendications précédentes, **caractérisé en ce que** les éléments d'éclairage (25) sont placés d'une manière telle qu'ils permettent de fournir un éclairage de fond couvrant le champ d'affichage (20) entier.

5. Groupe d'instruments selon l'une quelconque des revendications précédentes, **caractérisé en ce que** le groupe d'instruments (3) comprend un moyen (32) disposé pour détecter la valeur d'un paramètre se rapportant à une position du champ d'affichage (20), dans lequel l'élément d'indication (21) est placé.

6. Groupe d'instruments selon l'une quelconque des revendications précédentes, **caractérisé en ce que** l'unité de commande (31) est disposée pour commander les éléments d'éclairage (25) en fonction de la valeur de ce paramètre.

7. Groupe d'instruments selon l'une quelconque des revendications précédentes, **caractérisé en ce que** la zone partielle (30) s'étend sur le champ d'affichage (20) sur les deux côtés de l'élément d'indication (21).

8. Groupe d'instruments selon l'une quelconque des revendications précédentes, **caractérisé en ce que** le champ d'affichage comporte une première zone de surface et **en ce que** la zone partielle comporte une deuxième zone de surface qui est inférieure ou égale à 50 % de la première zone de surface.

9. Groupe d'instruments selon l'une quelconque des revendications précédentes, **caractérisé en ce que** ledit au moins un élément d'affichage (5 à 9) comprend au moins un compteur de vitesse, un compte-tours, un instrument de mesure de la pression des freins, une jauge de carburant et un instrument de mesure de la température du moteur.
